# EUROPÄISCHE PATENTANMELDUNG

(11) **EP 0 798 913 A2**
(43) Veröffentlichungstag der Anmeldung: **01.10.1997**
(21) Anmeldenummer: 97104551.3
(22) Anmeldetag: 18.03.1997
(51) Int. Cl.: H04M 11/00

(54) **Vorrichtung zum externen Anschalten wenigstens einer Zusatzeinrichtung an eine digitale Telekommunikationseinrichtung**

(30) Priorität: 29.03.1996 DE 19612485
(71) Anmelder: Deutsche Telekom AG, 53113 Bonn (DE)
(72) Erfinder: Adam, Christof, 64859 Eppertshausen (DE); Dihlmann, Klaus-Dieter, 64839 Münster (DE)

(57) **Zusammenfassung**

Die Erfindung betrifft eine Vorrichtung zum externen Anschalten wenigstens einer Zusatzeinrichtung (50), insbesondere eines akustischen, optischen und/oder mechanischen Signalgebers, an eine digitale Telekommunikations-Endeinrichtung (10), die an ein digitales Telekommunikationsnetz anschaltbar ist und eine Einrichtung (30) zum Auswerten von über einen Steuer- und/oder Nutzkanal übertragenen Steuerdaten aufweist. Über einen Signalisierungskreis (60) ist der zusätzliche Signalgeber (50) mit der digitalen Telekommunikations-Endeinrichtung (10) verbunden. Eine in der digitalen Telekommunikations-Endeinrichtung (10) angeordnete Schalteinrichtung (40) schließt und/oder öffnet unter Ansprechen auf die ausgewählten Steuerdaten den Signalisierungskreis (60) und aktiviert und/oder deaktiviert auf diese Weise den Signalgeber(50). Dank der Erfindung ist es möglich, wie bei gewöhnlichen analogen Teilnehmeranschlüssen ohne großen Aufwand zusätzliche Signalgeber (50) extern anschalten zu können.

## Beschreibung

Die Erfindung betrifft eine Vorrichtung zum externen Anschalten wenigstens einer Zusatzeinrichtung, insbesondere eines Signalgebers, an eine digitale Telekommunikationseinrichtung gemäß dem Oberbegriff des Anspruchs 1, eine digitale Telekommunikations-Endeinrichtung nach Anspruch 8, die an ein digitales Telekommunikationsnetz anschaltbar ist sowie einen Signalgeber zum Anschalten an eine digitale Telekommunikations-Endeinrichtung nach Anspruch 9.

Häufig möchte ein Telekommunikations-Teilnehmer neben einem Fernsprechapparat noch einen externen Signalgeber, z.B. ein zusätzliches Ruftongerät an seinen Teilnehmeranschluß anschalten können, um ein ankommendes Gespräch selbst dann wahrnehmen zu können, wenn er sich nicht in unmittelbarer Nähe seines Fernsprechapparates aufhält. Bei analogen Telekommunikationsnetzen kann dies recht einfach realisiert werden, indem der zusätzliche Signalgeber parallel zu einem im Fernsprechapparat integrierten Wecker geschaltet wird. Denn der benötigte Rufwechselstrom wird zentral von einer zugeordneten Vermittlungsstelle zum Teilnehmeranschluß übertragen und fließt danach sowohl durch den integrierten Wecker als auch durch den externen, parallel dazu angeschalteten Signalgeber.

Darüber hinaus sind digitale Telekommunikations-Endgeräte mit einem integrieten Generator zum Erzeugen eines internen Rufwechselstroms bekannt, die an Teilnehmeranschlußeinrichtungen mit einer sogenannten Y-Schnittstelle angeschaltet werden können. Ein zusätzlicher Ruftongeber kann extern über die Y-Schnittstelle angeschaltet werden. Da derartige Telekommunikations-Anschlußeinrichtungen heute nicht mehr eingesetzt werden, muß ein neuer Weg eingeschlagen werden, um in digitalen Telekommunikationsnetzen weiterhin das Anschalten von externen Signalgebern oder anderen Zusatzgeräten, wie z.B. einem aus der Ferne ansteuerbaren Türöffner, zu ermöglichen.

Der Erfindung liegt daher die Aufgabe zugrunde, eine Anschaltevorrichtung für eine digitale Telekommunikations-Endeinrichtung zu schaffen, die eine einfache externe Anschaltung von weiteren Signalgebern ermöglicht.

Die Erfindung löst dieses technische Problem mit den Merkmalen der Ansprüche 1, 8 und 9.

Vorteilhafte Weiterbildungen sind in den Unteransprüchen angegeben.

Die Erfindung basiert auf dem Grundgedanken, Zusatzeinrichtungen, insbesondere einen einen ankommenden Verbindungswunsch signalisierenden Signalgeber, auf einfache Weise an eine ISDN-Teilnehmeranschlußeinrichtung anzuschalten, wie dies bei herkömmlichen analogen Telekommunikationsnetzen bereits bekannt ist. Dazu ist eine Anschlußleitung bzw. ein Signalisierungskreis vorgesehen, an den die Zusatzeinrichtung angeschlossen ist. Eine Schalteinrichtung, die beispielsweise ein als Schalter fungierender Feldeffekttransistor, ein Relais oder ein optisches Schaltelemente sein kann, ist in einer digitalen Telekommunikations-Endeinrichtung angeordnet. Die digitale Telekommunikations-Endeinrichtung verfügt über eine Einrichtung, die die über einen Steuer- und/oder Nutzkanal übertragenen Steuerdaten auswertet. Unter Ansprechen auf die ausgewerteten Steuerdaten wird der Signalisierungskreis geschlossen und/oder geöffnet und somit der extern angeschaltete Signalgeber aktiviert bzw. deaktiviert.

Die heute eingesetzten Teilnehmer-Anschlußeinrichtungen verfügen über drei Anschlußpaare, von denen bisher lediglich zwei Anschlußpaare zum Anschalten einer digitalen Telekommunikations-Endeinrichtung, wie z.B. eines ISDN-Telephons, benötigt werden. Deshalb kann der Signalisierungskreis an das freie Anschlußpaar angeschaltet werden. Die Schalteinrichtung der digitalen Telekommunikations-Endeinrichtung kann über ein separates Kabel oder über ein gemeinsames Kabel, in dem sowohl die Adern des Signalisierungskreises als auch die vier Adern zum Anschalten einer digitalen Telekommunikations-Endeinrichtung zusammengefaßt sind, mit dem freien Anschlußpaar der Teilnehmeranschlußeinrichtung verbunden sein. Der Signalisierungskreis wird dann über das freie Anschlußpaar zum Eingang des extern anzuschaltenden Signalsgebers geführt. Anstatt den Signalisierungskreis, in den die Schalteinrichtung geschaltet ist, über das freie Anschlußpaar der Teilnehmeranschlußeinrichtung zu führen, kann er an die digitale Telekommunikations-Endeinrichtung angeschlossen und unmittelbar mit der Zusatzeinrichtung verbunden werden.

Als Zusatzeinrichtung kann ein gewöhnlicher Signalgeber, wie z.B. ein zusätzliches Ruftongerät, optische Signalgeber oder andere elektronische oder optische Einrichtungen benutzt werden.

Da weder an dem Teilnehmeranschluß noch von der digitalen Telekommunikationseinrichtung genügend Energie zum Betreiben eines zusätzlichen Signalgebers bereitgestellt wird, weist die Zusatzeinrichtung eine eigene Stromversorgung auf, die beispielsweise an ein gewöhnliches 230-V-Netz anschaltbar ist.

Die Zusatzeinrichtung bzw. der Signalgeber enthält ferner die eigentliche optische, akustische und/oder mechanische Signalisierungseinrichtung, die mittels der Schalteinrichtung aktiviert bzw. deaktiviert wird.

Soll der extern anschaltbare Signalgeber über höhere Leistungen betreibbar sein, kann eine separate Eingangs- und Auswerteeinrichtung im Signalgeber angeordnet sein, die unter Ansprechen auf den elektrischen Zustand des Signalisierungskreises - hochohmig im geöffneten und niederohmig im geschlossenen Zustand - die Signalisierungseinrichtung aktiviert und/oder deaktiviert.

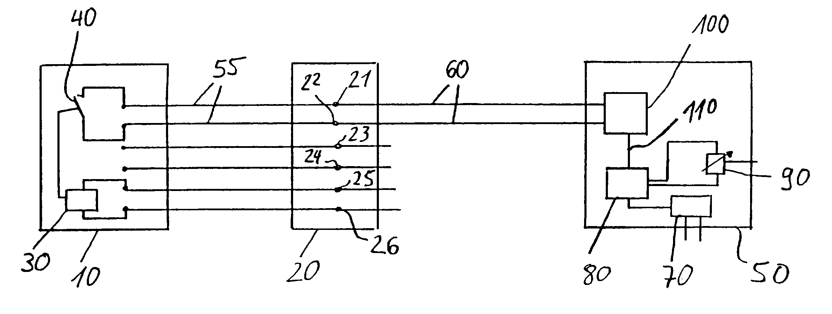

Die Erfindung wird nachstehend anhand eines Ausführungsbeispiels in Verbindung mit der beiliegenden Figur näher erläutert.

Die Figur zeigt in einem vereinfachten schematischen Blockschaltbild eine digitale Telekommunikations-Endeinrichtung 10, bei der es sich beispielsweise um einen ISDN-Fernsprechapparat handelt. Darüber hinaus ist eine mit 20 bezeichnete ISDN-Anschlußdose dargestellt, die in der Wohnung eines Teilnehmers installiert worden ist. Die ISDN-Anschlußdose 20 enthält beispielsweise zwei Anschlußpaare 23,24 und 25,26, an die die vier Adern des ISDN-Fernsprechapparates 10 angeschaltet sind. Der Teilnehmer verfügt beispielsweise über einen ISDN-Basisanschluß, an dem sowohl zwei Nutzkanäle B mit einer Datenrate von jeweils 64 kBit/s als auch ein Steuerkanal D mit einer Datenrate von 16 kBit/s empfangen werden können. An den Anschlüssen 23 und 24 liegen beispielsweise die beiden Sendeadern und an den Anschlüssen 25 und 26 die beiden Empfangsadern an, die mit dem ISDN-Fernsprechapparat 10 verbunden sind. Die mit 21 und 22 bezeichneten Anschlüsse werden derzeit noch nicht benutzt. Der an sich bekannte ISDN-Fernsprechapparat weist eine Auswerteeinrichtung 30 auf, die die über den Steuerkanal D übertragenen Steuerdaten auswerten und zur weiteren Verarbeitung bereitstellen kann. Neben den an sich bekannten Bauelementen, wie z.B. einer Steuereinrichtung sowie einem internen Wecker, verfügt der erfindungsgemäße ISDN-Fernsprechapparat 10 über eine Schalteinrichtung 40, die beispeilsweise durch einen Feldeffekttransistor, ein Relais, optische oder andere elektronische Bauelemente realisiert sein kann, die als Schalter implementiert werden können. Lediglich zu Erläuterungszwecken sei angenommen, daß die Schalteinrichtung 40 durch einen Feldeffekttransistor realisiert ist. Eine Möglichkeit, z.B. ein zusätzliches Ruftongerät 50 extern an den ISDN-Fernsprechapparat 10 anzuschalten, besteht darin, den als Schalter fungierenden Feldeffekttransistor 40 über eine separate Anschlußleitung 55, die an einer dafür am ISDN-Fernsprechapparat 10 ausgebildeten Buchse anschaltbar ist, mit den Anschlüssen 21, 22 der ISDN-Anschlußdose 20 zu verbinden. Alternativ kann die Anschlußleitung 55 mit den vier Adern, die zum Anschalten des ISDN-Fernsprechapparates 10 an die ISDN-Anschlußdose 20 dienen, zu einem gemeinsamen Kabel oder einer Anschlußschnur zusammengefaßt sein. Ein an das Anschlußpaar 21, 22 angeschlossener Signalisierungskreis 60 verbindet schließlich das Ruftongerät 50 mit dem als Schalter fungierenden Feldeffekttransitor 40. Anstatt, wie in der Figur dargestellt ist, das Ruftongerät 50 über den Signalisierungskreis 60, die ISDN-Anschlußdose 20 und die Anschlußleitung 55 mit dem ISDN-Fernsprechapparat 10 zu verbinden, ist es denkbar, an einem separaten Ausgang des ISDN-Fernsprechapparats 10 den Signalisierungskreis 60 herauszuführen und unmittelbar mit dem externen Ruftongerät 50 zu verbinden. Dazu kann an dem ISDN-Fernsprechapparat 10 eine sogenannte Western-Buchse vorgesehen sein. Wie in der Figur dargestellt ist, ist in dem Ruftongerät 50 eine an sich bekannte Stromversorgung 70 vorgesehen, die an ein 230-V-Netz anschaltbar ist. Die interne Stromversorgung 70 wird zum Betreiben der eigentlichen Signalisierungseinrichtung 80, in dem vorliegenden Beispiel ist diese eine akustische Signalisierungseinrichtung, benötigt. Über ein Einstellglied 90 kann beispielsweise die Lautstärke und die Klangfarbe der akustischen Signalisierungseinrichtung 80 eingestellt werden.

Nachfolgend wird kurz die Funktionsweise der in der Figur dargestellten Anlage erläutert. Bei einem ankommenden Gespräch werden über den D-Kanal Steuerdaten, wie z.B. die Rufnummer des rufenden Teilnehmers übertragen. Die Auswerteeinrichtung 50 empfängt die Steuerdaten am Anschlußpaar 25, 26 und wertet sie aus. Die nicht dargestellte Steuereinrichtung schließt unter Ansprechen auf die ausgewerteten Steuerdaten den als Schalter arbeitenden Feldeffekttransistor 40 bzw. den Signalisierungskreis 60 und aktiviert damit den akustischen Signalgeber 80 des Ruftongeräts 50. Um den akustischen Signalgeber 80 vor zu hohen Spannungen zu schützen, kann in dem Ruftongerät 50 eine separate Auswertestufe 100 implementiert sein. Die Auswertestufe 100 aktiviert den akustischen Signalgeber 80, wenn der Signalisierungskreis niederohmig ist, d.h. der als Schalter fungierende Feldeffekttransistor 40 ist leitend. Zu diesem Zweck kann eine widerstandsbelastete Anschlußleitung 110 mit dem akustischen Signalgeber verbunden werden.

Bei der Zusatzeinrichtung 50 kann es sich um beliebige elektronische und/oder optische Geräte, beispielsweise auch um einen elektrischen Türöffner, handeln, der beispielsweise von einem entfernten Mobilfunk-Telephon aus aktiviert und/oder werden kann. Als Telekommunikations-Endeinrichtung 10 kann ein Anrufbeantworter dienen, der neben einem Schalter 40 zumindest eine Einrichtung 30 aufweist, die die über den Nutzkanal B übertragenen Steuerinformationen auswertet. Die am Mobilfunk-Telephon eingegebene Steuerinformation kann beispielsweise den Befehl "Garagentür öffnen" enthalten. Unter Ansprechen auf diesen Befehl wird der Schalter 40 geschlossen und der Türöffner aktiviert. Auf diese Weise ist es möglich, beliebige Zusatzeinrichtungen 50 aus der Ferne mit Hilfe einer leistungsstarken Telekommunikations-Endeinrichtung 10 zu betreiben.

## Patentansprüche

1. Vorrichtung zum externen Anschalten wenigstens einer Zusatzeinrichtung (50), insbesondere eines Signalgebers, an eine digitale Telekommunikations-Endeinrichtung (10), die an ein digitales Telekommunikationsnetz anschaltbar ist und eine Einrichtung (30) zum Auswerten von über einen Steuer- und/oder Nutzkanal übertragenen Steuerdaten aufweist,
gekennzeichnet durch
einen Signalisierungskreis (60), an den die Zusatzeinrichtung (50) angeschlossen ist,
eine in der digitalen Telekommunikations-Endeinrichtung (10) angeordnete Schalteinrichtung (40), die unter Ansprechen auf die ausgewerteten Steuerdaten den Signalisierungskreis (60) schließt und/oder öffnet.

2. Vorrichtung zum Anschalten wenigstens einer Zusatzeinrichtung an eine digitale Telekommunikations-Endeinrichtung nach Anspruch 1,
dadurch gekennzeichnet, daß die Schalteinrichtung (40) an ein freies Anschlußpaar (21, 22) einer Teilnehmeranschlußeinrichtung (20) anschaltbar ist.

3. Vorrichtung zum Anschalten wenigstens einer Zusatzeinrichtung an eine digitale Telekommunikations-Endeinrichtung nach Anspruch 1 oder 2,
dadurch gekennzeichnet, daß die Zusatzeinrichtung (50) ein Signalgeber zum Anzeigen eines ankommenden Verbindungswunsches ist.

4. Vorrichtung zum Anschalten wenigstens einer Zusatzeinrichtung an eine digitale Telekommunikations-Endeinrichtung nach Anspruch 3,
dadurch gekennzeichnet, daß die Zusatzeinrichtung (50) eine integrierte Stromversorgung (70) aufweist.

5. Vorrichtung zum Anschalten wenigstens einer Zusatzeinrichtung an eine digitale Telekommunikations-Endeinrichtung nach Anspruch 3 oder 4,
dadurch gekennzeichnet, daß die Zusatzeinrichtung (50) eine Auswerteeinrichtung (100) aufweist.

6. Vorrichtung zum Anschalten wenigstens einer Zusatzeinrichtung an eine digitale Telekommunikations-Endeinrichtung nach einem der Ansprüche 3 bis 5,
dadurch gekennzeichnet, daß in der Zusatzeinrichtung (50) optische, akustische und/oder mechanische Signalisierungseinrichtungen (80) vorgesehen sind.

7. Vorrichtung zum Anschalten wenigstens einer Zusatzeinrichtung an eine digitale Telekommunikations-Endeinrichtung nach Anspruch 6,
gekennzeichnet durch wenigstens ein Einstellelement (90), das mit der jeweiligen Signalisierungseinrichtung (80) verbunden ist.

8. Digitale Telekommunikations-Endeinrichtung, die an ein digitales Telekommunikationsnetz anschaltbar ist und der eine Vorrichtung zum Anschalten wenigstens einer Zusatzeinrichtung (50) nach einem der Ansprüche 1 bis 7 zugeordnet ist.

9. Signalgeber zum Anschalten an eine digitale Telekommunikations-Endeinrichtung (10) über einen Signalisierungskreis (60),
gekennzeichnet durch
eine optische, akustische und/oder mechanische Signalisierungseinrichtung (80),
eine integrierte Stromversorgung (70), die an ein 230-V-Netz anschaltbar ist, und
eine Eingangs- und Auswerteeinrichtung (100), die unter Ansprechen auf den elektrischen Zustand des Signalisierungskreises (60) die Signalisierungseinrichtung (80) aktiviert und/oder deaktiviert.
